# EUROPÄISCHE PATENTSCHRIFT

(11) **EP 2 591 397 B1**
(45) Veröffentlichungstag und Bekanntmachung des Hinweises auf die Patenterteilung: **17.09.2014**
(21) Anmeldenummer: 11781730.4
(22) Anmeldetag: 12.05.2011
(51) Int. Cl.: G03B 17/56

(54) **KAMERAHALTERUNG, INSBESONDERE FÜR DIE ERSTELLUNG VON PANORAMABILDERN, UND VERFAHREN ZUM EINFÜGEN DER KAMERA IN DIE KAMERAHALTERUNG**
CAMERA MOUNT, IN PARTICULAR FOR PRODUCING PANORAMIC IMAGES, AND METHOD FOR INSERTING THE CAMERA INTO THE CAMERA MOUNT
SUPPORT D'APPAREIL PHOTO NOTAMMENT POUR RÉALISER DES PHOTOS PANORAMIQUES, ET PROCÉDÉ D'INSERTION DE L'APPAREIL PHOTO DANS CE SUPPORT

(30) Priorität: 12.05.2010 DE 102010028956
(43) Veröffentlichungstag der Anmeldung: 15.05.2013
(73) Patentinhaber: Mandrella-Simon, Tanja, 80538 München (DE)
(72) Erfinder: Mandrella-Simon, Tanja, 80538 München (DE)
(74) Vertreter: Manitz, Finsterwald & Partner GbR
(86) Internationale Anmeldenummer: PCT/DE2011/075106
(87) Internationale Veröffentlichungsnummer: WO 2012/022309

(56) Entgegenhaltungen:
- WO-A1-98/27457
- US-A- 5 903 782
- US-A1- 2004 086 271

## Beschreibung

### Gebiet der Erfindung

Die Erfindung betrifft eine Kamerahalterung, vorzugsweise für die Erstellung von Panoramabildern, mit einem an dem Objektiv der Kamera fixierbaren Objektivhalter, welcher mittels einer Justiereinrichtung um eine erste Drehachse herum drehbar mit einem Stativ verbindbar ist. Die Erfindung betrifft ferner eine Verwendung einer Kamerahalterung, die einen an dem Objektiv der Kamera fixierbaren Objektivhalter aufweist, der um eine erste Drehachse herum drehbar mit einem Stativ verbindbar ist, und ein Verfahren zum Einfügen einer Kamera in eine Kamerahalterung mit einem an dem Objektiv der Kamera fixierbaren Objektivhalter.

### Hintergrund der Erfindung

Es ist bekannt, Panoramabilder aus einer Anzahl von Einzelbildern zusammenzufügen, welche einander geringfügig überlappend aufgenommen wurden. Die Einzelbilder werden vorzugsweise digital erstellt oder digitalisiert und durch Verwendung einer geeigneten Software zu einem Panoramabild verbunden. Die Aufnahme der Einzelbilder erfolgt dabei in der Regel von einem gemeinsamen Standort aus, aber mit einer um eine senkrechte Drehachse und einen vorgegebenen Winkel verschwenkten Kamera. Um bei der Aufnahme der Einzelbilder einen Parallaxenfehler zwischen den Einzelaufnahmen zu vermeiden, welche das Zusammenfügen zu dem Panoramabild stören würde, wird die senkrechte Drehachse üblicherweise so gewählt, dass sie durch den Punkt ohne Parallaxe (POP) des Objektivs der Kamera verläuft. Demnach ist der POP im Sinne der vorliegenden Erfindung so definiert, dass Parallaxenfehler minimiert werden, wenn die Drehachse durch diesen Punkt verläuft. Der POP wird häufig auch als "Nodalpunkt", als "No-Parallax-Point" (NOP) oder als "optisch wirksame Mitte" der Kamera-Objektiv-Kombination bezeichnet. Die Drehachse läuft gewöhnlich auch durch die Mitte eines Stativs, sodass der POP genau über der Mitte des Stativs zum liegen kommt und die Kamera-Objektiv-Kombination sich um die Stativmitte drehen lässt. Eine lotrechte Ausrichtung der Drehachse erfolgt beispielsweise unter Zuhilfenahme einer Wasserwaage oder Libelle.

Um ein vollständiges Panorama zu erstellen, also einen Rundumblick um 360°, kann beispielsweise ein extremes Weitwinkelobjektiv von 15 mm Brennweite (Fischaugeobjektiv) verwendet werden, mit dem mindestens acht um jeweils 45° verdreht aufgenommene Einzelaufnahmen erstellt werden. Zwei weitere Aufnahmen werden mit senkrecht nach oben und senkrecht nach unten geschwenkter Kamera aufgenommen. Die Einzelaufnahmen überlappen sich jeweils um etwa 30° und lassen sich zu einer Panoramaaufnahme zusammenfügen, in welcher die Fügestellen zumindest nahezu unsichtbar sind.

Panoramabilder werden gerne für die Abbildung von Skylines, Horizonten und jede Art breitformatiger Motive benutzt, hier gerade zylindrische Motive. Die Fortschritte in der digitalen Fotografie erlauben jedoch unter Zuhilfenahme von entweder mehrreihigen Panoramen mit Weitwinkelobjektiven oder Fischaugeobjektiven auch die Erstellung sphärischer, also Kugel-Panoramen. Panoramen eignen sich Als Quicktime® oder Adobe® Flash®-Mediendateien hervorragend zur Erstellung virtueller Touren aber auch als zukunftsträchtiges Werkzeug für jede Art von Schadensaufnahme, z.B. bei Unfällen zur Baukontrolle oder zur Bestandsaufnahme ebenso wie zur immer wiederholbaren Tatortrekonstruktion oder für Versicherungsgutachten.

Unter Zuhilfenahme eines Laser- oder Bandmaßes und der bekannten Parameter des jeweiligen Objektivs können die wahren Größenordnungen und Abstände immer zuverlässig zurückgerechnet werden. Die ersten Architekturbüros beginnen mit Laser- und Fischaugentechnik Aufmaße von Bestandsbauten zu erstellen.

Eine Kamerahalterung und ein Verfahren der eingangs genannten Art sind aus der Praxis bekannt. Eine vorbekannte Vorrichtung, die von der Tischlerei Kuppe, 22926 Ahrensburg, Deutschland, zur Erstellung von Panoramaaufnahmen angeboten wird, besteht aus einer Justiereinrichtung, welche ineinander angeordnete, U-förmige Bügel mit nach oben auskragenden Schenkeln aufweist. Der innere, kleinere Bügel ist an seiner horizontalen Basis mittig mit einem Befestigungspunkt für eine ringförmige Objektivschelle ausgestattet, in welche das Objektiv der Kamera einschiebbar ist. Der äußere, größere Bügel umgreift den inneren Bügel und ist im Bereich seiner oberen Schenkelenden mit den zugeordneten oberen Schenkelenden des inneren Bügels um eine horizontale Drehachse schwenkbar verbunden. Die Winkelstellung der Bügel zueinander kann durch eine Spannvorrichtung festgelegt werden. Die Basis des äußeren Bügeln sitzt auf einer mit dem Kamerastativ verbundenen Panoramavorrichtung auf, mittels derer sich die Drehstellung der Kamera relativ zum Stativ um eine vertikale Drehachse einstellen lässt.

Eine andere Vorrichtung zur Erstellung von Panoramabildern wird in der internationalen Patentanmeldung WO 98/27457 A1 offenbart. Sie besteht aus einem nach unten offenen, topfartigen Bauteil, das um eine vertikale Drehachse drehbar mit dem Teller eines Kamerastativs verbunden ist. Auf der oberen Axialfläche des topfartigen Bauteils ist eine Aufnahmeeinrichtung zur Befestigung eines ringförmigen Adapters vorgesehen, dessen nach unten auskragender Fuß drehfest mit dem topfförmigen Bauteil verschraubt wird. Nach dem Einschieben des Objektivs in den Adapter ist ein Verschwenken der Kamera naturgemäß nur noch um die vertikale Drehachse oder, durch Verdrehen des Objektivs im Adapter, um die Objektivachse herum möglich.

An dem zuvor genannten Stand der Technik kann nachteilig sein, dass die Befestigung des Adapters an der Justiereinrichtung nur an einem Punkt und somit statisch ungünstig erfolgt.

Eine weitere Vorrichtung zur Aufnahme einer Kamera wird in der Patentanmeldung US 2004/0086270 A1 beschrieben. Die Vorrichtung weist Anschlussmittel zum Einsetzen einer mit einem festen Objektiv versehenen Kamera sowie ein eigenes, koaxial zu diesem Objektiv ausgerichtetes Linsensystem auf, welches in besonderer Weise zur Anfertigung von Panoramaaufnahmen geeignet ist. Die Vorrichtung wird auf ein Kamerastativ aufgeschraubt und weist eine Lagerung auf, mittels derer Kamera und Linsensystem relativ zum Kamerastativ um eine vertikale Drehachse verstellt werden können. Nachteilig an Vorrichtungen dieser Art kann sein, dass sie ein hohes Gewicht sowie eine erhebliche Baugröße aufweisen und aufgrund des gesonderten Linsensystems teuer sind.

Bei der Vorrichtung nach Patentschrift US 5,083,389 wird das Gehäuse der Kamera auf ein Podest aufgesetzt, das um eine horizontale, quer zur Blickrichtung der Kamera verlaufende Drehachse schwenkbar mit dem tellerartigen Sockel der Vorrichtung verbunden ist. Der Sockel weist seinerseits Mittel zum Verdrehen der Kamera gegenüber dem Stativ um eine vertikale Drehachse auf. Dieser Aufbau kann hinsichtlich seiner Handhabung ungünstig sein. Gleiches gilt für den am Gehäuse der Kamera angreifenden, in der Gebrauchsmusterschrift DE 20 2009 005 679 U1 offenbarten Adapter.

### Der Erfindung zugrundeliegende Aufgabe

Der Erfindung liegt die Aufgabe zugrunde, eine gattungsgemäße Kamerahalterung dahingehend weiterzuentwickeln, dass ihre mechanische Stabilität verbessert und somit auch ein Einsatz unter rauen Bedingungen, beispielsweise auf einer Baustelle, ermöglicht wird. Ferner soll durch Anwendung des erfindungsgemäßen Verfahrens und Benutzung der erfindungsgemäßen Kamerahalterung die Handhabung der Kamera bei der Erstellung von Einzelaufnahmen, insbesondere für das spätere Zusammenfügen zu einem Panoramabild, erleichtert werden.

### Erfindungsgemäße Lösung

Die der Erfindung zugrunde liegende Aufgabe wird bei einer Kamerahalterung der eingangs beschriebenen Art dadurch gelöst, dass der Objektivhalter zwei voneinander beabstandete Befestigungspunkte zur Verbindung mit der Justiereinrichtung aufweist. Der Objektivhalter wird dadurch statisch günstig in zwei Lagern gehalten. Durch diese Ausbildung kann der Objektivhalter sicher gehalten sowie auf diesen wirkende Momente verringert und/oder günstig in die umgebenden Strukturen abgeleitet werden. Die mechanische Stabilität der Kamerahalterung kann auf diese Weise insgesamt verbessert werden, was auch deren Handhabung, insbesondere in einer rauen Umgebung, erleichtert kann. Insbesondere können Beschädigungen an der Kamerahalterung, der Kamera oder dem Objektiv durch grobe oder unsachgemäße Handhabung vermieden werden.

Die Aufgabe wird ferner gelöst durch eine gattungsgemäße Kamerahalterung nach Anspruch 1, bei welcher der Objektivhalter mit einem Stopp ausgestattet ist, der die Einschiebetiefe des Objektivs in den Objektivhalter bestimmt. Dabei kann die Einschiebetiefe durch den Stopp so vorgegeben werden, dass der POP der Objektiv-Kamera-Kombination zumindest in einer Hauptgebrauchsstellung des Objektivhalters durch die erste Drehachse verläuft. Die Hauptgebrauchsstellung ist eine Stellung des Objektivhalters, die für die Aufnahme von Einzelbildern für das Zusammenfügen zu einem Panoramabild vorgesehen ist.

Entsprechend sieht die erfindungsgemäße Verwendung nach Anspruch 12 der Kamerahalterung, die mit einem Stopp ausgestattet ist, vor, die Einschiebetiefe des Objektivs so zu begrenzen, dass der POP des Objektivs durch die erste Drehachse verläuft, besonders vorzugsweise durch die Mitte eines Stativs, auf dem die Kamerahalterung montiert ist. Durch das hiermit ermöglichte einfache Auffinden der korrekten Kameraposition wird die Handhabung insbesondere für einen weniger fachkundigen Bediener oder unter ungünstigen Umgebungsbedingungen erleichtert. Insbesondere kann sichergestellt werden, dass der POP nach dem Einschieben des Objektivs in der Hauptgebrauchsstellung des Objektivhalters durch die erste Drehachse verläuft, wie es für Panoramaaufnahmen gewünscht wird. Ein aufwändiges Bestimmen des Nodalpunkts und/oder Justieren der Kamerahalterung anhand von Stellschrauben oder Ähnlichem kann entfallen.

Die Handhabung der Kamerahalterung wird in besonderer Weise dadurch erleichtert, dass beim Einfügen der Kamera in den an dem Objektiv der Kamera fixierbaren Objektivhalter zunächst der Objektivhalter aus seiner Hauptgebrauchsstellung um eine zweite Drehachse in eine Montagestellung verschwenkt wird. Nachfolgend kann das Objektiv von oben her in Schwerkraftrichtung in den Objektivhalter eingeschoben und dort axial gesichert werden, z.B. mit einer Spannschelle, die mit einem Schnellverschluss ausgestattet sein kann. Abschließend wird der Objektivhalter aus seiner Montagestellung in seine Hauptgebrauchsstellung zurückgeschwenkt.

Insbesondere wird die erfindungsgemäße Aufgabe durch ein verfahren nach Anspruch 13 gelöst, bei dem das Einschieben des Objektivs in den Objektivhalter bis zum Erreichen eines Stopps erfolgt. Die Achse des Objektivhalters im Sinne der vorliegenden Erfindung ist die Achse, die bei eingesetzter Kamera der Objektivachse entspricht. Die Handhabung der Kamerahalterung kann durch das erfindungsgemäße Einsetzten des Objektivs verbessert werden, insbesondere kann sichergestellt werden, dass der POP nach dem Einschieben des Objektivs in der Hauptgebrauchsstellung des Objektivhalters durch die erste Drehachse verläuft. Ferner kann das Risiko einer Fehlbedienung, welche zu Schäden an Adapter oder Objektiv führen könnte, gemindert werden.

Gemäß einer Ausgestaltung ist der Objektivhalter mit einem vorgegebenen Stopp für die Verwendung mit einem vorgegebenen Objektiv oder einer vorgegebenen Objektiv-Kamera-Kombination oder einer Mehrzahl von vorgegebenen Objektiven oder einer Mehrzahl von vorgegebenen Objektiv-Kamera-Kombinationen ausgestattet. Der Stopp ist derart ausgelegt, dass der POP nach dem Einschieben des vorgegebenen Objektivs in der Hauptgebrauchsstellung des Objektivhalters durch die erste Drehachse verläuft. Für andere Objektive oder andere Objektiv-Kamera-Kombinationen kann der Objektivhalter einen anders ausgelegten Stopp aufweisen, so dass der POP nach dem Einschieben dieser Objektive in der Hauptgebrauchsstellung des Objektivhalters ebenfalls durch die erste Drehachse verläuft.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Die erfindungsgemäße Kamerahalterung ist um eine erste Drehachse drehbar, die vorzugsweise die Drehachse ist, um die der Objektivhalter, und damit die Kamera, zur Aufnahme von einzelnen horizontal zu einem Panorama zusammensetzbaren Bildern gedreht wird. Die Lage dieser ersten Drehachse wird im Folgenden als "vertikale" bezeichnet. Verzugsweise verläuft die erste, vertikale Drehachse lotrecht, gewöhnlich senkrecht zum Untergrund. Vorzugsweise verläuft die erste Drehachse durch die Mitte eines Stativs, auf das die Kamerahalterung montierbar ist. Vorzugsweise sind Rastmittel vorgesehen, mit denen der Adapter bei dieser Drehung in vorgesehenen Winkelstellungen rastmäßig arretiert werden kann. Diese Winkelstellungen sind vorzugsweise äquidistant; z.B. können vier, sechs, acht, zehn oder zwölf um jeweils 90°, 60°, 45°, 36° bzw. 30° beabstandete Winkelstellungen als Raststellungen vorgesehen sein. So lässt sich z.B. mit acht um 45° äquidistant beabstandeten Winkelstellungen (gewöhnlich zuzüglich einer senkrecht nach oben gerichteten Zenith- und einer senkrecht nach unten gerichteten Bodenaufnahme) ein 360°-Panorama erstellen. In einer Ausgestaltung der Erfindung ist zusätzlich oder alternativ eine stufenlose Drehung um die erste Drehachse über den gesamten Winkelbereich von 360° und besonders vorzugsweise auch eine Arretierung in diesen Stellungen möglich.

Typischerweise verläuft auch die Längsrichtung des Stativs vertikal. Außerdem ist die Kamerahalterung vorzugsweise um eine zweite Drehachse schwenkbar, die vorteilhafterweise das Einsetzen der Kamera in den Adapter erleichtern und bestimmten Ausführungen der Erfindung die Aufnahme mehrzeiliger Panoramen ermöglichen kann. Diese zweite Drehachse verläuft vorzugsweise orthogonal zur ersten Drehachse, also "horizontal", gewöhnlich parallel zum Untergrund. Vorzugsweise schneidet die zweite Drehachse die erste Drehachse. Die zweite Drehachse ist vorzugsweise so zur Objektivachse ausgerichtet, dass der POP nach dem erfindungsgemäßen Einschieben des Objektivs in der Hauptgebrauchsstellung des Objektivhalters durch die zweite Drehachse verläuft.

Bei dem bevorzugten erfindungsgemäßen Verfahren zum Einfügen der Kamera in die Kamerahaltung verläuft die Achse des Objektivhalters in der Hauptgebrauchsstellung horizontal, d.h., wenn die Kamera in den Objektivhalter in dessen Hauptgebrauchsstellung eingesetzt ist, ist die Objektivachse horizontal ausgerichtet, wie für die Aufnahme von Einzelfotographien für einfache einzeilige Panoramabilder im allgemeinen erforderlich. Besonders vorzugsweise verläuft die horizontale Richtung senkrecht zur Lotrichtung, gewöhnlich parallel zum Untergrund. In der Montagestellung verläuft die Achse des Objektivhalters vorzugsweise vertikal, Dadurch ist vorteilhaft erreichbar, dass die Kamera zur Montage mit vertikal verlaufender Objektivachse von oben in den Objektivhalter eingesetzt werden kann. Dieses Vorgehen hat sich als besonders einfach und intuitiv erwiesen und kann die Handhabbarkeit der erfindungsgemäßen Kamerahalterung deshalb wesentlich verbessern. Vorzugsweise sind Rastmittel vorgesehen, mit denen der Objektivhalter in der Hauptgebrauchsstellung oder der Montagestellung, besonders vorzugsweise in beiden Stellungen, rastmäßig arretiert werden kann.

In einer bevorzugten Ausführung ist der Objektivhalter in mindestens eine, typischerweise zwei nebengeordnete Gebrauchsstellungen arretierbar. Vorzugsweise kann die Achse des Objektivhalters einmal gegen und einmal im Urzeigersinn um den gleichen Winkel, z.B. 30°, 40° oder 50°, bezogen auf die Hauptgebrauchsstellung in nebengeordnete Gebrauchsstellungen verschwenkt und arretiert werden. In einer Ausgestaltung der Erfindung ist zusätzlich oder alternativ ein stufenloses Verschwenken um die zweite Drehachse in frei wählbare nebengeordnete Gebrauchsstellungen und besonders vorzugsweise auch eine Arretierung in diesen Stellungen möglich. Durch die nebengeordneten Gebrauchsstellungen können vorteilhafterweise auch mehrzeilige Panoramen aufgenommen werden.

Mit Vorteil sind die Befestigungspunkte des Objektivhalters einander näherungsweise gegenüber liegend am Objektivhalter vorgesehen, besonders vorzugsweise horizontal gegenüberliegend. Hierdurch kann eine besonders günstige Kraftableitung erfolgen, insbesondere in dem Bereich der Justiereinrichtung, welcher zur Verschwenkung der Kamera um die zweite Drehachse vorgesehen ist. In einer Ausführung der Erfindung liegen die Befestigungspunkte im Wesentlichen auf einer Achse, die senkrecht zur ersten Drehachse verläuft, vorzugsweise auf der zweiten Drehachse.

Weiterhin ist angedacht, dass die Justiereinrichtung mit Vorteil zwei von einem ersten, horizontal ausgerichteten und um die erste Drehachse drehbaren Azimutteller vertikal nach oben auskragende Säulen oder Winkel aufweist. Mit Vorteil weisen die Säulen oder Winkel beiderseits des Objektivhalters um die zweite Drehachse drehbare Höhenwinkelschwenklager auf, welche an den Befestigungspunkten mit dem Objektivhalter verbunden sind. Diese Ausbildung führt zu einem mechanisch belastbaren Aufbau, dessen Bauteile jedoch nur einen geringen Bauraum erfordern und die Handhabung der Kamerahalterung nicht behindern. Vorzugsweise liegen die Höhenwinkelschwenklager im Wesentlichen auf einer Achse, die senkrecht zur ersten Drehachse verläuft, besonders vorzugsweise auf der zweiten Drehachse. Die Säulen oder Winkel können einstückig an den Azimutteller angeformt, aber auch form- oder stoffschlüssig mit diesem verbunden sein, beispielsweise durch Verschrauben, Vernieten oder Verschweißen.

In einer Ausführung der Erfindung sind Mittel vorgesehen, die sicherstellen, dass der POP der Objektiv-Kamera-Kombination durch das Verschwenken in nebengeordnete Gebrauchsstellungen nicht im Raum verschoben wird. Hierzu können beispielsweise Exzenter im Bereich der Höhenschwenklager vorgesehen sein.

Die Handhabung wird nach einer weiteren vorteilhaften Ausführung der Erfindung dadurch verbessert, dass mindestens ein Höhenwinkelschwenklager mit einem Höhenwinkelarretiermittel wirkverbunden ist. Dieses Höhenwinkelarretiermittel kann dabei zum Verstellen, zum Fixieren der eingestellten Position oder zu beiden Zwecken dienen. Zum Verschwenken des Objektivhalters in den Höhenwinkelschwenklagers ist außerdem vorzugsweise eine Handhabe, z.B. in Form eines an der Säule von außen anliegenden Hebels oder Stellrads vorgesehen. Die Handhabe befindet sich Vorzugsweise in der Nähe eines der Lager.

Mit Vorteil ist ferner vorgesehen, dass der Objektivhalter mit einem Adapter ausgestattet ist, der an dem Objektivhalter befestigt werden kann, z.B. mittels eine Bajonettverschlusses. Der Adapter kann austauschbar ausgebildet sein. Vorzugsweise ist der Stopp an dem Adapter des Objektivhalters ausgebildet. Hierdurch ist auf einfache Weise eine Anpassung der Kamerahalterung an die für die Aufnahme vorgesehene Kamera, beispielsweise den Durchmesser des Objektivs und die Lage des POP, möglich.

In einer bevorzugten Ausführung der *Erfindung* ist ein Fixiermittel vorgesehen, um das Objektiv in dem Objektivhalter lösbar zu fixieren. Dabei kann es sich z.B. um ein Spannmittel handeln, z.B. in Form einer Spannschelle, vorzugsweise mit einem Schnellverschluss, die um fingerförmige Vorsprünge des Objektivhalters, die an das Objektiv angreifen, gelegt und dann gespannt wird. Vorzugsweise sind diese Vorsprünge an dem Adapter angeordnet. Die bevorzugten Vorsprünge greifen an einem oder mehreren nicht-verdrehbaren Teil(en) des Objektivs an, d.h. an einem Teil des Objektivs, das gewöhnlich nicht verdreht werden kann, um z.B. die Brennweite oder die Blende des Objektivs einzustellen. In einer Ausführung der Erfindung greifen die Vorsprünge ausschließlich an einem oder mehreren nicht-verdrehbaren Teil(en) des Objektivs an, in einer anderen zusätzlich auch an verdrehbaren Teilen.

Mit besonderem Vorteil ist vorgesehen, dass die Kamerahalterung mit einer Nivellierplatte ausgestattet ist. Hierbei ist der Azimutteller zu einer unterhalb derselben angeordneten zweiten Platte über Verstellmittel parallelveränderlich verbunden (wobei die Verbindung auch indirekt z.B. vermittels einer weiter unten beschriebenen Einrichtung zum Drehen des Azimuttellers um die zweite Drehachse ausgebildet sein kann), wobei die zweite Platte vorzugsweise ein Befestigungsmittel zur Befestigung an einem Stativ aufweist, wobei auch andere Geräte z.B. eine Lasermessgerät, an dem die erfindungsgemäße Kamerahalterung befestigt werden kann, im Sinne der vorliegenden Erfindung als Stativ angesehen werden. Hierdurch ist auch bei unebenem und ein Gefälle aufweisendem Untergrund eine genaue horizontale Ausrichtung des Azimuttellers möglich, ohne dass Manipulationen am Stativ erforderlich werden. Als Verstellmittel können beispielsweise drei zueinander in Form eines Dreiecks beabstandete, horizontal zwischen der ersten und der zweiten Platte angeordnete Spindeleinrichtungen dienen, deren axiale Erstreckung durch Verdrehen eines Rändelrads oder dergleichen einstellbar ist.

In einer bevorzugten Ausführung ist die erfindungsgemäße Kamerahalterung an, vorzugsweise auf ein Lasermessgerät montierbar, beispielsweise eines von dem Hersteller "Leica Geosystems". Mit solchen Geräten können z.B. Bauwerke vermessen werden, während gleichzeitig mittels der auf dem Lasermessgerät montierten Kamerahalterung und Kamera eine korrespondierende Panoramaaufnahme möglich ist. Vorteilhaft kann hierdurch die Vermessung und die Panoramaaufnahme von einem im Wesentlichen identischen Standort aus vorgenommen werden. Es ist auch möglich, Vermessung und die Panoramaaufnahme im Wesentlichen gleichzeitig durchzuführen. Wenn das Lasermessgerät bereits mit einer eigenen Nivelliereinrichtung ausgestattet ist, kann bei der erfindungsgemäßen Kamerahalterung auf die oben beschriebene Nivellierplatte verzichtet werden.

Vorzugsweise sind der Azimutteller und die obere Platte des Nivelliertellers oder eine Montageplatte zum Befestigen der Kamerahalterung auf einem Stativ oder dem vorgenannten Lasermessgerät zueinander um die zweite Drehachse drehbar. Dazu ist der Azimutteller mit einem unteren Teller drehbar verbunden, um mit diesem unteren Teller eine Panoramaplatte zu bilden. In diesem Fall ist die Ausrichtung der zweiten Drehachse besonders einfach, außerdem ist die Kamerahalterung besonders kompakt und robust.

Die Handhabung der Kamerahalterung wird nach einer weiteren bevorzugten Ausbildung der Erfindung dadurch verbessert, dass der Stopp die Einschiebetiefe des Objektivs durch Kontakt mit dem Objektiv oder Gehäuse der Kamera begrenzt. Besonders vorzugsweise wird die Einschiebetiefe des Objektivs durch Kontakt mit dem Gehäuse der Kamera begrenzen Hierdurch wird beim Erreichen des Stopps eine ungewollte Impulseinleitung auf empfindliche Bauteile des Objektivs, beispielsweise auf die Verstellringe für Schärfe und Blende, vermieden. Durch die relativ große Einschiebetiefe wird ferner eine bessere Gewichtsverteilung von Kameragehäuse und -objektiv erreicht.

Hinsichtlich des erfindungsgemäßen Verfahrens ist aus den zuvor genannten Gründen bevorzugt, dass das Einschieben des Objektivs in den Objektivhalter bis zum Erreichen des Stopps erfolgt. Vorteilhaferweise kann in dieser Stellung die zweite Drehachse durch den POP des Objektivs verlaufen. Vorzugsweise verläuft die zweite Drehachse dabei durch die Objektivachse.

In einer Ausgestaltung des erfindungsgemäßen Verfahrens ist der Adapter vor dem Einschieben des Objektivs in den Objektivhalter bereits mit dem Objektivhalter verbunden, z.B. durch einen Bajonettverschluss, sodass der Verfahrensschritt des Einschiebens des Objektivs in den Objektivhalter genauer ein Einschieben des Objektivs in den Adapter ist, vorzugsweise begrenzt durch einen an dem Adapter angeordneten Stopp. Der erfindungsgemäße Verfahrensschritt der axialen Sicherung des Objektivs am Objektivhalter ist bei dieser Ausführung der Erfindung vorzugsweise ein Sichern des Objektivs an dem Adapter, z.B. mit der vorgenannten Spannschelle.

In einer alternativen Ausgestaltung des erfindungsgemäßen Verfahrens ist das Objektiv bereits vor seinem Einschieben in den Objektivhalter in den Adapter geschoben, vorzugsweise begrenzt durch einen an dem Adapter angeordneten Stopp, sodass der Verfahrensschritt des Einschiebens des Objektivs in den Objektivhalter genauer ein Einschieben der Kombination aus Adapter und Objektiv in dem Objektivhalter ist. Der erfindungsgemäße Schritt der axialen Sicherung des Objektivs am Objektivhalter ist bei dieser Ausführung der Erfindung vorzugsweise ein Sichern des Adapters an dem Objektivhalters, z.B. mit einem Bajonettverschluss. Auch bei dieser Verfahrensvariante würden vorzugsweise nach dem Einschieben des Objektivs in den Adapter diese beiden Teile aneinander gesichert, z.B. mit der vorgenannten Spannschelle, und zwar besonders vorzugsweise bevor die Kombination aus Adapter und Objektiv in dem Objektivhalter geschoben wird.

In einer bevorzugten Ausführung der Erfindung verdecken der Adapter und/oder der Objektivhalter die Einstellvorrichtungen des Objektivs in Hauptgebrauchsstellung der Kamera zumindest teilweise. Hierdurch wird zur Verbesserung der Handhabung vermieden, dass vor dem Einfügen des Objektivs vorgenommenen Einstellungen, beispielsweise für Entfernung und/oder Blende, bei der Erstellung der Einzelaufnahmen ungewollt verändert werden. Darüber hinaus können der Adapter und/oder der Objektivhalter in diesem Fall breiter und somit mechanisch robuster ausgeführt werden.

### Kurzbeschreibung der Figuren

Die Erfindung wird im Folgenden anhand einer schematischen Zeichnung an einem Ausführungsbeispiel mit weiteren Einzelheiten näher erläutert. Es zeigen:
Fig. 1 eine Frontalansicht der erfindungsgemäßen Kamerahalterung in Hauptgebrauchsstellung, und
Fig. 2 einen Schnitt durch die horizontale Schwenkachse des Höhenwinkelschwenklagers.

### Ausführliche Beschreibung der Erfindung anhand eines Ausführungsbeispiels

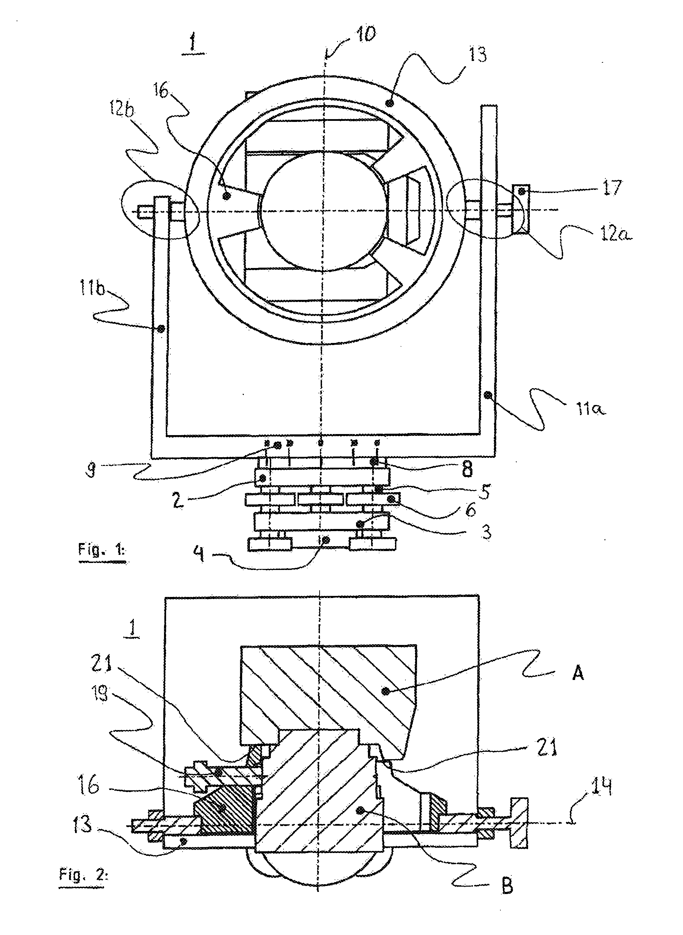

Die in Fig. 1 dargestellte Halterung 1 zur Aufnahme einer Kamera A mit einem Objektiv B weist einen Nivellierteller mit einer ersten, oberen Platte 2, einer zweiten, unteren Platte 3 und drei Nivellierspindeleinrichtungen 5 auf. An der unteren Platte 3 ist eine Montageplatte 4 mit einer Gewindebohrung angebracht, in welche von unten die Spindel eines handelsüblichen Stativs eingeschraubt werden kann, beispielsweise eines Dreibeinstativs, um die Halterung auf dem Stativ zu montieren. Mit der Montageplatte 4 kann die Kamerahalterung 1 auch z.B. auf ein Lasermessgerät montiert werden.

Die Längsachsen der drei zwischen der unteren Platte 3 und der oberen Platte 2 befindlichen Spindeleinrichtungen 5 sind vertikal ausgerichtet. Zueinander sind die Spindeleinrichtungen 5 derart beabstandet, dass sie in Aufsicht die Ecken eines Dreiecks ausbilden. Im Ausführungsbeispiel sind die Platten 2, 3 kreisrund ausgeführt, wobei die Spindeleinrichtungen 5 in gleichem Abstand zum Zentrum der Platten 2, 3 als auch zueinander angeordnet sind, das genannte Dreieck also ein gleichseitiges Dreieck darstellt, dessen Mittelpunkt mit dem Zentrum der Platten 2, 3 zusammenfällt.

Durch Verdrehen zugeordneter Rändelräder 6 der Spindeleinrichtungen 5 lässt sich der axiale Abstand zwischen der oberen 2 und der unteren Platte 3 am Ort jeder Spindeleinrichtung 5 gesondert einstellen, wodurch die Parallelität der oberen Platte 2 gegenüber der unteren Platte 3 verändert werden kann. Unter Zuhilfenahme einer an der oberen Platte 2 vorgesehenen Libelle 7 kann die obere Platte 2 genau waagerecht ausgerichtet werden, auch wenn die untere Platte 3 aufgrund eines unebenen Untergrunds oder der Einstellung des Stativs eine leichte Neigung aufweist.

An die obere Platte 2 des Nivelliertellers ist ein unterer, kreisförmiger Panoramaplatten-Teller 8 montiert, auf dem koaxial ein oberer, gleichfalls kreisrunder Azimutteller 9 der Panoramaplatte aufliegt. Die gemeinsame Achse der Teller 8, 9 bildet eine vertikale, orthogonal zu den Tellerflächen der Panoramaplatte ausgerichtete erste Drehachse 10 aus, um welche der Azimutteller 9 der Panoramaplatte gegenüber dem unteren, drehfest mit dem Stativ oder dem anderen Gerät verbindbaren Teller 8 der Panoramaplatte verdreht werden kann. Eine Markierung auf der Mantelfläche des Azimuttellers 9 der Panoramaplatte und an diesen angrenzende Winkelangaben auf der Mantelfläche des unteren Tellers 8 der Panoramaplatte erlauben eine winkelgenaue Verdrehung der Teller 8, 9 zueinander. Zwischen den Tellern 8, 9 der Panoramaplatte federnd wirkende, nicht dargestellte Rastmittel können darüber hinaus zum selbstfindenden Einstellen vorgegebener Winkelstellungen benutzt werden.

Vom Azimutteller 9 kragen nach oben zwei einstückig an den Azimutteller 20 angebrachte oder angeformte, diametral angeordnete Säulen oder Winkel 11a, 11b aus, so dass die gedachte Verbindungsgerade zwischen den Säulen 11a, 11b durch die vertikale Drehachse 10 verläuft. Im oberen Bereich der Säulen 11a, 11b sind auf gleicher Höhe Höhenwinkelschwenklager 12a, 12b für einen zwischen den Säulen oder Winkeln 11 a, 11b angeordneten Objektivhalter 13 vorgesehen, welche relativ zu den Säulen oder Winkeln 11a, 11b um eine zweite, horizontal verlaufende Drehachse 14 schwenkbar ist.

Der Objektivhalter weist zwei diametral gegenüberliegende Befestigungspunkte auf, an denen er an die jeweils zugeordneten Schwenklager 12a, 12b angebracht ist. Eine Höhenwinkelrastvorrichtung kann vorgegebene Schwenkwinkel des Objektivhalters 13 arretieren. Die vertikale Drehachse 10 und die horizontale Drehachse 14 und die optische Achse des Objektivs schneiden sich in einem Punkt.

Das Objektivhalter 13 nimmt einen an dem Objektivhalter 13 befestigbaren Adapter 16 auf, der wiederum das Objektiv B mit daran angebrachter Kamera A aufnimmt. Durch eine Spanneinrichtung 19 wird der Adapter an einem nicht verdrehbaren Ring des Objektivs B gehalten. So werden Kamera A und Objektiv B insbesondere auch bei Schwenkbewegungen sicher im Objektivhalter 13 in ihrer Position gehalten.

Zur Vorbereitung der Aufnahme der Einzelbilder wird die erfindungsgemäße Kamerahalterung 1 drehfest mit dem Stativ oder dem anderen Gerät verbunden und derart ausgerichtet, dass die erste Drehachse 10 näherungsweise vertikal verläuft. Anschließend wird der ringförmigen Objektivhalter 13 aus der in der Figur gezeigten Hauptgebrauchsstellung mit Hilfe der Höhenschwenklager 12a, 12b durch Betätigen eines Stellrads 17 in der Nähe eines 12a der Höhenschwenklager um die zweite Drehachse 14 herum um 90° in eine Montagestellung verschwenkt, in welcher die Längsachse des Adapters 16 senkrecht ausgerichtet ist und mit der vertikalen Drehachse 10 der Kamerahalterung 1 fluchtet. Das Objektiv der Kamera wird auf die gewünschte Entfernung und Blendenstellung eingestellt und nachfolgend von oben der Schwerkraft folgend in den Adapter 16 eingeführt, bis dieser mit seinem Stopp 21 am Gehäuse der Kamera anliegt. Durch Betätigen der Spanneinrichtung 19 wird das Objektiv im Adapter 16 axial gesichert. Die Breite des Adapters 16 ist so gewählt, dass die Einstellringe des Objektivs verdeckt werden. Zur Anpassung an eine andere Kamera kann der Adapter 16 gegen einen Adapter mit anderen Abmessungen ausgetauscht werden. Zu diesem Zweck sind die Befestigung des Adapters 16 an dem Objektivhalter 13 lösbar ausgebildet.

Nachfolgend wird der Objektivhalter 13 mit Hilfe der Höhenschwenklager 12a, 12b um 90° gegenüber der Monatgestellung verschwenkte Hauptgebrauchstellung geschwenkt. Die Höhenwinkelrastvorrichtung kann diesen Winkel vorgeben. Durch Verstellen der Spindeleinrichtungen 5 des Nivelliertellers unter Beobachtung der Libelle 7 kann die Lage der oberen Platte 2 nunmehr gegenüber der unteren Platte 3 so verändert werden, dass die Drehachse 10 exakt vertikal verläuft. Naturgemäß ist damit auch die die Längsachse des Objektivs schneidende zweite Drehachse 14 genau horizontal ausgerichtet. Durch die von dem Stopp 21 vorgegebene Einschiebetiefe des Objektivs B in den Adapter 16 ist ferner sichergestellt, dass die vertikale Drehachse 10 in Hauptgebrauchsstellung der Kamerahalterung 1 durch die POP des Objektivs B verläuft. Die Kamerahalterung 1 und die von ihr gehaltene Kamera A sind jetzt einsatzbereit. Der Abbau der Kamerahalterung erfolgt sinngemäß in umgekehrter Reihenfolge.

Nach Aufnahme des ersten Einzelbilds wird die Kamera A einschließlich Objektivhalter 13 und Säulen 11 durch Verstellen des Azimuttellers 9 gegenüber dem unteren Teller 8 der Panoramaplatte um die vertikale Drehachse 10 herum um den gewünschten Winkel verdreht, beispielsweise um 45°. Nach Aufnahme eines jeden weiteren Einzelbilds erfolgt eine weitere Verdrehung um den gleichen Winkel, bis sich die Kamera wieder in ihrer Initialstellung befindet. Rastelemente für die Drehung des Azimuttellers 9 können solche Winkel vorgeben.

Aus dieser heraus wird nun der Objektivhalter 13 bei Bedarf ausgehend von der Hauptgebrauchsstellung einmal gegen den und einmal im Uhrzeigersinn um 40° (d.h. einmal um 50° und einmal um 130° bezogen auf die Montagestellung) in nebengeordnete Gebrauchstellungen verschwenkt, in denen jeweils weitere Einzelbilder aufgenommen, werden. Auch diese Winkel kann die Höhenwinkelrastvorrichtung vorgeben.

Zum Schwenken der Kamera A und zum Drehen des Azimuttellers können auch Motoren angebracht sein, die mit einer Steuerung einen vollautomatischen Aufnahmezyklus erlauben.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichen

- 1: Kamerahalterung
- 2: Obere Platte des Nivelliertellers
- 3: Untere Platte des Nivelliertellers
- 4: Montageplatte
- 5: Spindeleinrichtung des Nivelliertellers
- 6: Rändelrad
- 8: Unterer Teller der Panoramaplatte
- 9: Azimutteller der Panoramaplatte
- 10: Erste Drehachse
- 11a, 11b: Säule
- 12a, 12b: Höhenwinkelschwenklager
- 13: Objektivhalter
- 14: Zweite Drehachse
- 16: Adapter
- 17: Stellrad
- 19: Spanneinrichtung
- 21: Stopp

- A: Kamera
- B: Objektiv

## Patentansprüche

1. Kamerahalterung (1) mit einem an dem Objektiv (B) der Kamera (A) fixierbaren Objektivhalter (13), welcher mittels einer Justiereinrich-tung um eine erste Drehachse (10) für die Erstellung von Panora-mabildern drehbar mit einem Stativ verbindbar ist,
**dadurch gekennzeichnet, dass**
der Objektivhalter (13) mit einem vorgegebenen Stopp (21) ausgestattet ist, wobei der Stopp (21) derart ausgestaltet ist, dass er die Einschiebetiefe des Objektivs (B) durch Kontakt mit dem Gehäuse der Kamera (A) oder des Objektivs (B) in den Objektivhalter (13) vorgibt und das Einschieben des Objektivs in den Objektivhalter derart begrenzt, dass der Punkt ohne Parallaxe (POP) des Objektivs (B) durch die erste Drehachse (10) verläuft.

2. Kamerahalterung (1) nach Anspruch 1, **dadurch gekennzeichnet, dass** der Objektivhalter (13) mit dem vorgegebenen Stopp (21) für die Verwendung mit einem vorgegebenen Objektiv (B) oder einer vorgegebenen Objektiv-Kamera-Kombination oder einer Mehrzahl von vorgegebenen Objektiven (B) oder einer Mehrzahl von vorgegebenen Objektiv-Kamera-Kombinationen ausgelegt ist.

3. Kamerahalterung (1) nach einem der vorausgehenden Ansprüche, **dadurch gekennzeichnet, dass** der Objektivhalter (13) die Einstell-vorrichtungen des Objektivs (B) in Hauptgebrauchsstellung der Kamera (A) zumindest teilweise verdeckt.

4. Kamerahalterung (1) nach einem der vorhergehenden Ansprüche, **dadurch gekennzeichnet, dass** der Objektivhalter (13) mit einem austauschbaren Adapter (16) ausgestattet ist.

5. Kamerahalterung (1) nach einem der vorhergehenden Ansprüche, **dadurch gekennzeichnet, dass** der Objektivhalter (13) zwei voneinander beabstandete Befestigungspunkte zur Verbindung mit der Justiereinrichtung aufweist.

6. Kamerahalterung (1) nach Anspruch 5, **dadurch gekennzeichnet, dass** die Befestigungspunkte einander gegenüber liegend am Objektivhalter (13) vorhanden sind.

7. Kamerahalterung (1) nach Anspruch 6, **dadurch gekennzeichnet, dass** die Justiereinrichtung zwei von einem ersten, horizontal ausgerichteten und um die erste Drehachse drehbaren Azimutteller (9) vertikal nach oben auskragende Säulen oder Winkel (11a, 11b) und in diesen beiderseits des Objektivhalters (13) um eine zweite Drehachse (14) drehbare Höhenwinkelschwenklager (12a, 12b) aufweist, welche an den Befestigungspunkten mit dem Objektivhalter (13) verbunden sind.

8. Kamerahalterung (1) nach Anspruch 7, **dadurch gekennzeichnet, dass** mindestens ein Höhenwinkelschwenklager (12a) mit einem Höhenwinkelarretiermittel (15a, 15b) wirkverbunden ist.

9. Kamerahalterung (1) nach Anspruch 7 oder 8, **dadurch gekennzeichnet, dass** sie mit einer Nivellierplatte (2, 3, 5, 6) ausgestattet ist.

10. Kamerahalterung (1) nach Anspruch 9, **dadurch gekennzeichnet, dass** die zweite Platte (3) ein Befestigungsmittel (4) zur Befestigung an einem Stativ aufweist.

11. Kamerahalterung (1) nach einem der Ansprüche 7 bis 10, **dadurch gekennzeichnet, dass** der um die erste Drehachse (10) drehbare Azimutteller (9) und die Nivellierplatte zueinander um die erste Drehachse (10) drehbar sind.

12. Verwendung einer Kamerahalterung (1), die einen an dem Objektiv der Kamera (A) fixierbaren Objektivhalter (13) aufweist, der um eine erste Drehachse (10) für die Erstellung von Panoramabildern drehbar mit einem Stativ verbindbar ist und der mit einem vorgegebenen Stopp (21) ausgestattet ist, um die Einschiebetiefe des Objektivs durch Kontakt mit dem Gehäuse der Kamera (A) oder des Objektivs (B) vorzugeben und das Einschieben des Objektivs in den Objektivhalter zu begrenzen, zur Anordnung des Objektivs in der Kamerahalterung (1) derart, dass der Punkt ohne Parallaxe (POP) des Objektivs durch die erste Drehachse läuft.

13. Verfahren zum Einfügen einer Kamera (A) in eine Kamerahalterung (1) mit einem an dem Objektiv (B) der Kamera (A) fixierbaren Objektivhalter (13), welcher mittels einer Justiereinrichtung um eine erste Drehachse (10) für die Erstellung von Panoramabildern drehbar mit einem Stativ verbunden ist, **gekennzeichnet durch** die Schritte:
- Schwenken des Objektivhalters (13) aus seiner Hauptgebrauchsstellung um eine zweite Drehachse (14) in eine Montagestellung;
- Einschieben des Objektivs (B) in den Objektivhalter (13) oder einen Adapter (16) des Objektivhalters (13) bis zum Erreichen eines vorgegebenen Stopps (21);
- Axiale Sicherung des Objektivs (B) am Objektivhalter (13);
- Zurückschwenken des Objektivhalters (13) aus seiner Montagestellung in seine Hauptgebrauchsstellung, wobei der Stopp (21) die Einschiebtiefe des Objektivs (B) **durch** Kontakt mit dem Gehäuse der Kamera (A) oder des Objektivs (B) vorgibt und das Einschieben des Objektivs in den Objektivhalter oder den Adapter des Objektivhalters derart begrenzt, dass der Punkt ohne Parallaxe (POP) des Objektivs (B) nach dem Zurückschwenken des Objektivhalters (13) in seine Hauptgebrauchsstellung **durch** die erste Drehachse (10) verläuft.

## Claims

1. A camera mount (1) comprising an objective retainer (13) which can be fixed to the objective (B) of the camera (A), the objective retainer being connectable to a tripod and being rotatable about a first axis of rotation (10) by means of an adjustment device for the generation of panoramic images, **characterised in that**
the objective retainer (13) is equipped with a predefined stop (21), wherein the stop (21) is configured in such a way that it predefines the insertion depth of the objective (B) into the objective retainer (13) through a contact with the housing of the camera (A) or of the objective (B) and limits the insertion of the objective into the objective retainer in such a way that the point without a parallax (POP) of the objective (B) extends through the first axis of rotation (10) objective.

2. A camera mount (1) in accordance with claim 1, **characterised in that** the objective retainer (13) having the predefined stop (21) is configured for the use with a predefined objective (B) or a predefined objective-camera combination or a plurality of predefined objectives (B) or a plurality of predefined objective-camera combinations.

3. A camera mount (1) in accordance with one of the preceding claims, **characterised in that** the objective retainer (13) at least partly covers the adjustment apparatus of the objective (B) in the main position of use of the camera (A).

4. A camera mount (1) in accordance with any one of the preceding claims, **characterised in that** the objective retainer (13) is equipped with an exchangeable adapter (16).

5. A camera mount (1) in accordance with any one of the preceding claims, **characterised in that** the objective retainer (13) has two fastening points for the connection to the adjustment device, with the fastening points being spaced apart from one another.

6. A camera mount (1) in accordance with claim 5, **characterised in that** the fastening points are present disposed opposite one another at the objective retainer (13).

7. A camera mount (1) in accordance with claim 6, **characterised in that** the adjustment device has two columns or brackets (11a, 11b) which protrude vertically upwardly from a first horizontally aligned azimuth plate (9) that can be rotated about the first axis of rotation and in which elevation angle swivel bearings (12a, 12b) rotatable about a second axis of rotation (14) are provided at both sides of the objective retainer (13), with the elevation angle swivel bearings being connected to the objective retainer (13) at the fastening points.

8. A camera mount (1) in accordance with claim 7, **characterised in that** at least one elevation angle swivel bearing (12a) is effectively connected to an elevation angle locking means (15a, 15b).

9. A camera mount (1) in accordance with claim 7 or claim 8, **characterised in that** it is equipped with a levelling plate (2, 3, 5, 6).

10. A camera mount (1) in accordance with claim 9, **characterised in that** the second plate (3) has a fastening means (4) for the fastening to a tripod.

11. A camera mount (1) in accordance with any one of the claims 7 to 10, **characterised in that** the azimuth plate (9) rotatable about the first axis of rotation (10) and the levelling plate are rotatable with respect to each other about the first axis of rotation (10).

12. Use of a camera mount (1) which comprises an objective retainer (13) which can be fixed to the objective of the camera (A), the objective retainer being connectable to a tripod and being rotatable about a first axis of rotation (10) for the generation of panoramic images, and being equipped with a predefined stop (21) in order to predefine the insertion depth of the objective through a contact with the housing of the camera (A) or of the objective (B) and to limit the insertion of the objective into the objective retainer for the arrangement of the objective in the camera mount (1) in such a way that the point without a parallax (POP) of the objective (B) extends through the first axis of rotation.

13. A method of inserting a camera (A) into a camera mount (1) comprising an objective retainer (13) which can be fixed to the objective (B) of the camera (A), the objective retainer being connectable to a tripod and being rotatable about a first axis of rotation (10) by means of an adjustment device for the generation of panoramic images,
**characterised by** the steps of:
- pivoting the objective retainer (13) about a second axis of rotation (14) from its main position of use into an assembly position;
- inserting the objective (B) into the objective retainer (13) or into an adapter (16) of the objective retainer (13) until a predefined stop has been reached;
- axially fastening the objective (B) at the objective retainer (13);
- pivoting back the objective retainer (13) from its assembly position into its main position of use, wherein the stop (21) predefines the insertion depth of the objective (B) through a contact with the housing of the camera (A) or of the objective (B) and limits the insertion of the objective into the objective retainer or into the adapter of the objective retainer in such a way that the point without a parallax (POP) of the objective (B) extends through the first axis of rotation (10) after the pivoting back of the objective retainer (13) into its main position of use.

## Revendications

1. Support pour appareil photographique (1) comprenant un porte-objectif (13) susceptible d'être fixé à l'objectif (B) de l'appareil (A), ledit porte-objectif étant capable de rotation au moyen d'un dispositif d'ajustement autour d'un premier axe de rotation (10) pour la réalisation d'images panoramiques et susceptible d'être relié à un statif, **caractérisé en ce que**
le porte-objectif (13) est équipé d'un arrêt prédéterminé (21), ledit arrêt (21) étant conçu de telle façon qu'il impose la profondeur d'introduction de l'objectif (B) par contact avec le boîtier de l'appareil (A) ou de l'objectif (B) dans le porte-objectif (13) et limite l'introduction de l'objectif dans le porte-objectif de telle façon que le point sans parallaxe (PSP) de l'objectif (B) passe par le premier axe de rotation (10).

2. Support pour appareil photographique (1) selon la revendication 1, **caractérisé en ce que** le porte-objectif (13) avec l'arrêt prédéterminé (21) est conçu pour l'utilisation avec un objectif prédéterminé (B) ou avec une combinaison prédéterminée objectif/appareil photographique ou avec une pluralité d'objectifs prédéterminés (B) ou encore avec une pluralité de combinaisons prédéterminées objectifs/appareils photographiques.

3. Support pour appareil photographique (1) selon l'une des revendications précédentes, **caractérisé en ce que** le porte-objectif (13) recouvre au moins partiellement les dispositifs de réglage de l'objectif (B) dans la position d'utilisation principale de l'appareil (A).

4. Support pour appareil photographique (1) selon l'une des revendications précédentes, **caractérisé en ce que** le porte-objectif (13) est équipé d'un adaptateur interchangeable (16).

5. Support pour appareil photographique (1) selon l'une des revendications précédentes, **caractérisé en ce que** le porte-objectif (13) présente deux points de fixation écartés l'un de l'autre pour la liaison avec le dispositif d'ajustement.

6. Support pour appareil photographique (1) selon la revendication 5, **caractérisé en ce que** les points de fixation sont présents sur le porte-objectif (13) à l'opposé l'un de l'autre.

7. Support pour appareil photographique (1) selon la revendication 6, **caractérisé en ce que** le dispositif d'ajustement comprend deux colonnes ou équerres (11a, 11b), en porte-à-faux verticalement vers le haut depuis une première plaque azimutale (9) orientée horizontalement et capable de rotation autour du premier axe de rotation, et des paliers de pivotement angulaire en hauteur (12a, 12b) capable de rotation dans ces colonnes ou équerres des deux côtés du porte-objectif (13) autour d'un second axe de rotation (14), lesdits paliers étant reliés aux points de fixation avec le porte-objectif (13).

8. Support pour appareil photographique (1) selon la revendication 7, **caractérisé en ce qu'**au moins un palier de pivotement angulaire en hauteur (12a) est relié de manière active avec un organe d'arrêt angulaire en hauteur (15a, 15b).

9. Support pour appareil photographique (1) selon la revendication 7 ou 8, **caractérisé en ce qu'**il est équipé d'une plaque de mise à niveau (2, 3, 5,6).

10. Support pour appareil photographique (1) selon la revendication 9, **caractérisé en ce que** la seconde plaque (3) comprend un moyen de fixation (4) pour la fixation sur un statif.

11. Support pour appareil photographique (1) selon l'une des revendications 7 à 10, **caractérisé en ce que** la plaque azimutale (9) capable de rotation autour du premier axe de rotation (10) et la plaque de mise à niveau sont capables de rotation l'une par rapport à l'autre autour du premier axe de rotation (10).

12. Utilisation d'un support pour appareil photographique (1), qui comprend un porte-objectif (13) susceptible d'être fixé à l'objectif de l'appareil (A), ledit porte-objectif étant capable de rotation au moyen d'un dispositif d'ajustement autour d'un premier axe de rotation (10) pour la réalisation d'images panoramiques et susceptible d'être relié à un statif, et étant équipé d'un arrêt prédéterminé (21), afin d'imposer la profondeur d'introduction de l'objectif par contact avec le boîtier de l'appareil (A) ou de l'objectif (B) et pour limiter l'introduction de l'objectif dans le porte-objectif, destiné à agencer l'objectif dans le support pour appareil photographique (1) de telle façon que le point sans parallaxe (PSP) de l'objectif passe par le premier axe de rotation.

13. Procédé pour insérer un appareil photographique (A) dans un support pour appareil photographique (1), comprenant un porte-objectif (13) susceptible d'être fixé sur l'objectif (B) de l'appareil (A), ledit porte-objectif étant capable de rotation au moyen d'un dispositif d'ajustement autour d'un premier axe de rotation (10) pour la réalisation d'images panoramiques, et étant relié à un statif, **caractérisé par** les étapes consistant à :
- faire basculer le porte-objectif (13) hors de sa position d'utilisation principale autour d'un second axe de rotation (14) jusque dans une position de montage ;
- introduire l'objectif (B) dans le porte-objectif (13) ou dans un adaptateur (16) du porte-objectif (13) jusqu'à atteindre un arrêt prédéterminé (21) ;
- bloquer axialement l'objectif (B) sur le porte-objectif (13) ;
- faire basculer en retour le porte-objectif (13) hors de sa position de montage jusque dans sa position d'utilisation principale, de sorte que l'arrêt (21) impose la profondeur d'introduction de l'objectif (B) par contact avec le boîtier de l'appareil (A) ou de l'objectif (B), et limite l'introduction de l'objectif dans le porte-objectif ou dans l'adaptateur du porte-objectif de telle façon que le point sans parallaxe (PSP) de l'objectif (B), après avoir fait basculer en retour le porte-objectif (13) jusque dans sa position d'utilisation principale, passe par le premier axe de rotation (10).
